# EUROPEAN PATENT SPECIFICATION

(11) **EP 4 726 202 B1**
(45) Date of publication and mention of the grant of the patent: **02.12.2026**
(21) Application number: 25195054.9
(22) Date of filing: 11.08.2025
(51) Int. Cl.: F03D 1/06, F03D 7/02

(54) **HYDRAULIC PITCH SYSTEM AND WIND TURBINE**
HYDRAULISCHES PITCH-SYSTEM UND WINDTURBINE
SYSTÈME DE PAS HYDRAULIQUE ET ÉOLIENNE

(30) Priority: 08.10.2024 CN 202411395779
(43) Date of publication of application: 15.04.2026
(73) Proprietor: Sany Renewable Energy Co., Ltd., Beijing 102206 (CN)
(72) Inventor: SUN, Li, Beijing, 102206 (CN); LI, Qiang, Beijing, 102206 (CN); XIANG, Pengsheng, Beijing, 102206 (CN); ZHAO, Daifu, Beijing, 102206 (CN)
(74) Representative: Elzaburu S.L.P.

(56) References cited:
- CN-A- 113 864 256
- US-A1- 2023 349 360

## Description

### TECHNICAL FIELD

The present invention relates to the technical field of wind power pitch control, and in particular, to a hydraulic pitch system and a wind turbine.

### BACKGROUND

A hydraulic pitch system is an important apparatus, in a wind turbine, for controlling a blade angle (i.e., a pitch angle). By adjusting the blade angle, a force exerted by wind on blades can be changed, thereby controlling a rotational speed and a power output of a wind turbine generator. This is crucial for optimizing power generation efficiency, protecting a device from overload, and enabling rapid shutdown in an emergency situation.

Currently, the hydraulic pitch system in the wind turbine is typically distributed in a hub and a nacelle, requiring to be connected to a hydraulic-electric slip ring via a pipeline. This occupies a large space, involves a long pipeline and numerous pipe joints, resulting in high cost of the hydraulic pitch system. Furthermore, it is prone to loosening or seal failure, leading to a risk of oil leakage in the pipeline.

CN113864256A discloses a hydraulic pitch control system for wind turbine generator units, including a rotating oil station, a high-pressure oil pump group, a high-pressure oil pump outlet valve group, an accumulator assembly, a pitch hydraulic cylinder, a pitch hydraulic cylinder integrated control valve group and an electrical slip ring, all of which are respectively installed in the hub nacelle of the wind turbine generator unit. The rotating oil station includes a rotating oil tank, and the rotating oil tank is provided with a breathing device for enabling the rotating oil tank to rotate together with the hub. The electrical slip ring transmits control signals from the generator nacelle to the hub nacelle. The pitch hydraulic cylinder integrated control valve group includes a servo proportional valve group, and the servo proportional valve group includes one or more servo proportional valves connected in parallel. Through this control system, the problems of complex structure, easy leakage and inconvenient maintenance can be effectively solved.

### SUMMARY

The main objective of the present invention is to propose a hydraulic pitch system and a wind turbine, aiming to solve problems of high cost of the hydraulic pitch system and a risk of oil leakage. The present invention is set out in the appended set of claims.

To achieve the above objective, a hydraulic pitch system proposed by the present invention is for a wind turbine. The hydraulic pitch system includes:
a hub; and
a hydraulic apparatus arranged in the hub, where the hydraulic apparatus includes a cylinder for driving a blade movement and an oil tank for storing hydraulic oil, the cylinder is connected to the oil tank via a connecting pipeline, the connecting pipeline is provided with a valve assembly and a hydraulic drive apparatus for controlling a flow of hydraulic oil in the connecting pipeline, and the valve assembly and the hydraulic drive apparatus are both mounted on the cylinder.

In an implementation, the hydraulic apparatus further includes an accumulator arranged on the connecting pipeline, the accumulator being mounted on the cylinder; and/or,
the oil tank is mounted on the cylinder.

In an implementation, the oil tank and the accumulator are respectively arranged on both sides of the cylinder.

In an implementation, the hydraulic pitch system further comprises a carrier body, the carrier body is provided with a first accommodating cavity, a second accommodating cavity, a third accommodating cavity, and a connecting channel, the hydraulic drive apparatus and the valve assembly are arranged in the first accommodating cavity, the oil tank is arranged in the second accommodating cavity, the cylinder is arranged in the third accommodating cavity, the connecting channel communicates with the first accommodating cavity, the second accommodating cavity, and the third accommodating cavity;
where the connecting pipeline includes the connecting channel.

In an implementation, the carrier body is further provided with a fourth accommodating cavity, the connecting channel communicating with the fourth accommodating cavity;
the hydraulic apparatus further includes an accumulator, the accumulator being arranged in the fourth accommodating cavity.

In an implementation, the hub includes a hub body and a connecting sleeve provided on the hub body, the connecting sleeve rotating synchronously with the hub body.

In an implementation, the oil tank is arranged in the connecting sleeve; and/or,
the hydraulic pitch system further includes an accumulator, the accumulator being arranged in the connecting sleeve.

In an implementation, the connecting sleeve includes an outer cylinder and an inner cylinder rotatably mounted within the outer cylinder, the outer cylinder being used to connect to a nacelle or a gearbox, the inner cylinder being connected to the hub body.

In an implementation, the hydraulic pitch system further includes a first drive power source arranged in the hub, the first drive power source being electrically connected to the hydraulic drive apparatus.

In an implementation, the hydraulic pitch system further includes a plurality of sensors and a controller respectively connected to the plurality of sensors, the plurality of sensors being used to collect real-time parameters of components of the hydraulic pitch system, the controller being used to monitor a state of the hydraulic pitch system based on the real-time parameters collected by the plurality of sensors.

In an implementation, the plurality of sensors comprise at least two of the following: a displacement sensor arranged on a piston rod of the cylinder, used to monitor real-time position information of the piston rod of the cylinder; a pressure sensor arranged on an accumulator circuit, used to monitor a real-time pressure value of the accumulator circuit; a temperature sensor arranged in the oil tank, used to monitor a real-time oil temperature of the oil tank; a liquid level sensor arranged on the oil tank, used to monitor a real-time liquid level value of the oil tank; a leakage sensor arranged below the cylinder and/or the valve assembly, used to monitor whether there is a leakage point in the cylinder and/or the valve assembly.

In an implementation, the plurality of sensors perform preprocessing on the collected real-time parameters and send preprocessed data to the controller, where the preprocessing includes removing an abnormal value based on a threshold, and/or, removing an abnormal value based on a difference between a current value and a previous value.

In an implementation, the controller respectively compares real-time values collected by the plurality of sensors with corresponding preset thresholds, and determines whether a fault exists and a faulty component based on a comparison result.

The present invention also proposes a wind turbine, including the above-mentioned hydraulic pitch system. The hydraulic pitch system includes:
a hub; and
a hydraulic apparatus arranged in the hub, where the hydraulic apparatus includes a cylinder for driving a blade movement and an oil tank for storing hydraulic oil, the cylinder is connected to the oil tank via a connecting pipeline, the connecting pipeline is provided with a valve assembly and a hydraulic drive apparatus for controlling a flow of hydraulic oil in the connecting pipeline, and the valve assembly and the hydraulic drive apparatus are both mounted on the cylinder.

In the technical solution of the present invention, by arranging the hydraulic apparatus in the hub, on the one hand, a hydraulic-electric slip ring can be omitted, which not only avoids a failure of the hydraulic-electric slip ring, reducing a failure rate of the hydraulic pitch system, but also reduces the cost of the hydraulic pitch system; on the other hand, pipelines in the nacelle can be omitted, which can reduce a length of the connecting pipeline and the number of pipe joints, helping to reduce leakage points in the pipelines. At the same time, it is also convenient to integrate the valve assembly on the cylinder, improving integration level of the hydraulic pitch system, which helps to further reduce the length of pipelines, both contributing to reducing the failure rate of the hydraulic pitch system and reducing the cost of the hydraulic pitch system, thereby solving the problems of high cost of the hydraulic pitch system and the risk of oil leakage.

### BRIEF DESCRIPTION OF DRAWINGS

To describe technical solutions in embodiments of the present invention or in the prior art more clearly, the following briefly introduces accompanying drawings required for describing the embodiments or the prior art. Obviously, the accompanying drawings in the following description show merely some embodiments of the present invention, and a person of ordinary skill in the art may still derive other drawings from the structures shown in these accompanying drawings without creative efforts.
FIG. 1 is a schematic structural diagram of an embodiment of a hydraulic pitch system provided by the present invention.
FIG. 2 is a structural block diagram of an embodiment of a hydraulic apparatus provided by the present invention.
FIG. 3 is a structural block diagram of another embodiment of a hydraulic apparatus provided by the present invention.
FIG. 4 is a structural block diagram of yet another embodiment of a hydraulic apparatus provided by the present invention.
FIG. 5 is a schematic structural diagram of an embodiment of a connecting sleeve provided by the present invention.

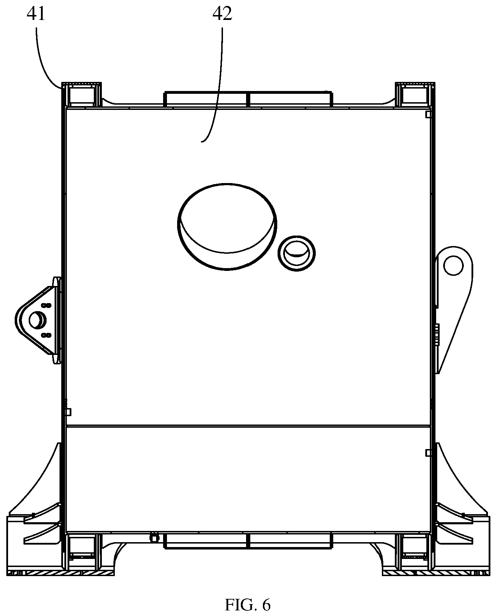

FIG. 6 is a schematic structural diagram of another embodiment of a connecting sleeve provided by the present invention.

### Reference signs:

100. Hydraulic pitch system; 1. Hub; 2. Hydraulic apparatus; 21. Cylinder; 22. Oil tank; 23. Valve assembly; 24. Hydraulic drive apparatus; 241. Hydraulic pump; 242. Drive motor; 25. Accumulator; 3. Carrier body; 31. First accommodating cavity; 311. First accommodating sub-cavity; 312. Second accommodating sub-cavity; 32. Second accommodating cavity; 33. Third accommodating cavity; 34. Fourth accommodating cavity; 4. Connecting sleeve; 41. Outer cylinder; 42. Inner cylinder.

The realization of the objectives, functional features, and advantages of the present invention will be further described in conjunction with the embodiments and with reference to the accompanying drawings.

### DESCRIPTION OF EMBODIMENTS

The technical solutions in embodiments of the present invention will be clearly and comprehensively described below with reference to accompanying drawings in the embodiments of the present invention. Obviously, the described embodiments are merely a part of the embodiments of the present invention, rather than all of the embodiments. The scope of protection being defined by the appended claims.

It should be noted that if a directional indication (such as up, down, left, right, front, rear ...) is involved in the embodiments of the present invention, the directional indication is only used to explain a relative positional relationship, a movement condition, etc., between respective components in a specific posture. If the specific posture changes, the directional indication will change accordingly.

Furthermore, if descriptions involving "first", "second", etc., appear in the embodiments of the present invention, the descriptions of "first", "second", etc., are only for descriptive purposes and cannot be understood as indicating or implying relative importance or implicitly indicating the number of the indicated technical features. Thus, a feature defined with "first" or "second" may explicitly or implicitly include at least one feature. In addition, if "and/or" appears throughout the text, its meaning includes three parallel solutions. Taking "A and/or B" as an example, it includes solution A, or solution B, or the solution where both A and B are satisfied. Furthermore, the technical solutions between various embodiments may be combined with each other, but this should be based on what is achievable by a person of ordinary skill in the art. When a combination of technical solutions appears contradictory or impossible to implement, it should be considered that such a combination of technical solutions does not exist and is also not within the claimed protection scope of the present invention.

A hydraulic pitch system is an important apparatus, in a wind turbine, for controlling a blade angle (i.e., a pitch angle). By adjusting the blade angle, a force exerted by wind on blades can be changed, thereby controlling a rotational speed and a power output of a wind turbine generator. This is crucial for optimizing power generation efficiency, protecting a device from overload, and enabling rapid shutdown in an emergency situation.

Currently, the hydraulic pitch system in the wind turbine typically includes a cylinder, an oil tank, a valve assembly, and a hydraulic drive apparatus. Among them, the cylinder and the valve assembly are generally arranged in a hub, while the oil tank and the hydraulic drive apparatus are generally arranged in a nacelle, and components in the nacelle and components in the hub are connected via pipelines. However, due to a relative motion between the nacelle and the hub, a hydraulic-electric slip ring for dynamic-static conversion of hydraulic fluid and electrical signals, along with a matching pipeline layout, is required. On one hand, the hydraulic-electric slip ring is costly and prone to leakage; on the other hand, the pipelines are long, inevitably causing entanglement or spatial overlap. Furthermore, pipelines in the hub may loosen or get bent during the hub operation, leading to a risk of oil leakage in the pipelines.

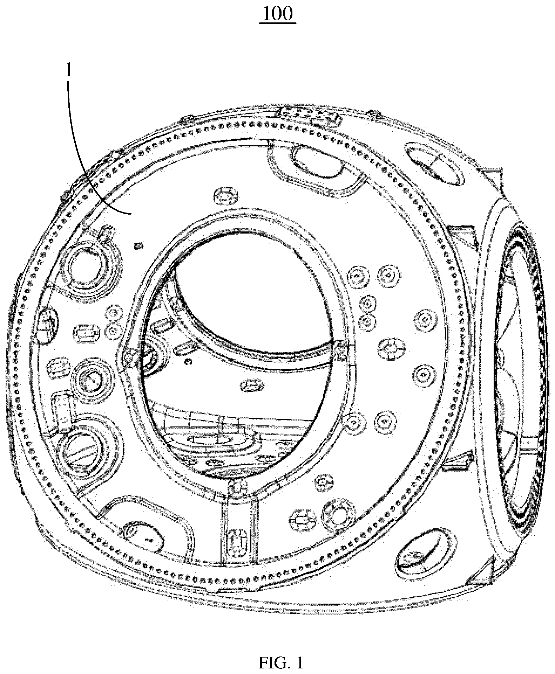

Based on this, the present invention proposes a hydraulic pitch system for a wind turbine, aiming to solve the problems of high cost of the hydraulic pitch system and a risk of oil leakage. FIG. 1 to FIG. 5 are schematic structural diagrams of the hydraulic pitch system provided by the present invention.

Please refer to FIG. 1 to FIG. 5, in an embodiment of the present invention, the hydraulic pitch system 100 includes a hub 1 and a hydraulic apparatus 2. The hydraulic apparatus 2 is arranged in the hub 1. The hydraulic apparatus 2 includes a cylinder 21 for driving a blade movement and an oil tank 22 for storing hydraulic oil. The cylinder 21 is connected to the oil tank 22 via a connecting pipeline. The connecting pipeline is provided with a valve assembly 23 and a hydraulic drive apparatus 24 for controlling a flow of hydraulic oil in the connecting pipeline. The valve assembly 23 and the hydraulic drive apparatus 24 are both mounted on the cylinder 21.

In the technical solution of the present invention, by arranging the hydraulic apparatus 2 in the hub 1, on the one hand, the hydraulic-electric slip ring can be omitted, which not only avoids a failure of the hydraulic-electric slip ring, thereby reducing a failure rate of the hydraulic pitch system 100, but also reduces the cost of the hydraulic pitch system 100; on the other hand, pipelines in the nacelle can be omitted, which can reduce a length of the connecting pipeline and the number of pipe joints, helping to reduce leakage points in the pipelines. At the same time, it is also convenient to integrate the valve assembly 23 on the cylinder 21, improving integration level of the hydraulic pitch system 100, which helps to further reduce the length of the pipelines, both contributing to reducing the failure rate of the hydraulic pitch system 100 and reducing the cost of the hydraulic pitch system 100, thereby solving the problems of high cost of the hydraulic pitch system 100 and the risk of oil leakage.

It can be understood that the hydraulic drive apparatus 24 includes a hydraulic pump 241 and a drive motor 242. The hydraulic pump 241 is arranged on the connecting pipeline for driving the flow of hydraulic oil in the connecting pipeline. The drive motor 242 is drivingly connected to the hydraulic pump 241 to drive the hydraulic pump 241 to work. The hydraulic pump 241 and the drive motor 242 are integrated together to enhance the integration level of the hydraulic drive apparatus 24.

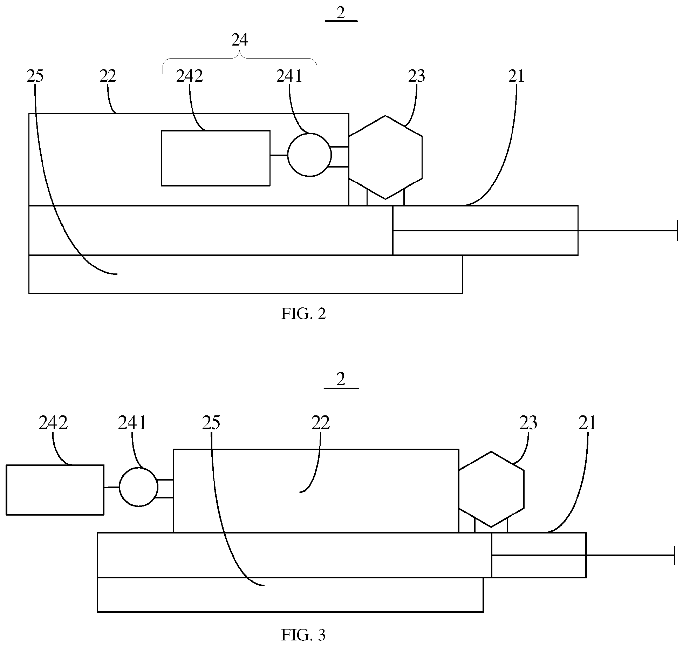

In an implementation, please refer to FIG. 3, the hydraulic drive apparatus 24 and the valve assembly 23 are respectively arranged at two ends of the oil tank 22. On the one hand, arranging the hydraulic drive apparatus 24 outside the oil tank 22 helps reduce requirements for the hydraulic drive apparatus 24, thereby reducing cost of the hydraulic drive apparatus 24. On the other hand, it allows the weights of the hydraulic drive apparatus 24 and the valve assembly 23 to be evenly distributed, avoiding localized overweight, thereby facilitating the arrangement of the hydraulic drive apparatus 24, the valve assembly 23, and the oil tank 22 integrated together within the hub 1.

In another embodiment, please refer to FIG. 2, the hydraulic drive apparatus 24 is arranged in the oil tank 22 to utilize the space of the oil tank 22 for arranging the hydraulic drive apparatus 24, helping to reduce the space occupied by the hydraulic apparatus 2, improving a space utilization rate of the hydraulic apparatus 2, and thus facilitating a reduction in the integrated volume.

It should be noted that, there are various manners to connect the valve assembly 23 to the oil tank 22. The valve assembly 23 may be installed on the oil tank 22 via a screw connection structure, or may be welded to the oil tank 22, or may be installed on the oil tank 22 via a clamp band, etc., which is not limited by the present invention. Similarly, there are various manners to connect the hydraulic drive apparatus 24 to the oil tank 22. The hydraulic drive apparatus 24 may be installed on the oil tank 22 via a screw connection structure, or may be welded to the oil tank 22, or may be installed on the oil tank 22 via a clamp band, etc., which is not limited by the present invention.

It should be noted that, in order to enable the oil tank 22 to rotate with the hub 1, the oil tank 22 includes a pressurized oil tank 22. Thus, by using the pressurized oil tank 22, a certain residual pressure can be maintained on the oil surface in the oil tank 22 to prevent oil return during the rotation of the hub 1. It can be understood that there are various types of pressurized oil tank 22, for example, the pressurized oil tank 22 may be an air-intake pressurized oil tank 22, or may be a self-pressurized oil tank 22, etc., which is not limited by the present invention.

In an embodiment of the present invention, please refer to FIG. 2 to FIG. 3, the hydraulic pitch system 100 includes an accumulator 25 arranged on the connecting pipeline, the accumulator 25 being mounted on the cylinder 21. Thus, by providing the accumulator 25, power is provided to enable emergency feathering of the hydraulic pitch system 100. It can be understood that there are various types of accumulator 25, for example, it may be a bladder accumulator 25, a piston accumulator 25, or a diaphragm accumulator 25, etc., which is not limited by the present invention.

In an implementation, the oil tank 22 is mounted on the cylinder 21. This facilitates integrating the oil tank 22, the valve assembly 23, and the hydraulic drive apparatus 24 with the cylinder 21, improving the integration level of the hydraulic pitch system 100. It not only facilitates overall installation within the hub 1, but also reduces the length of the pipeline, helping to reduce cost and failure rate. Of course, in other embodiments, the cylinder 21 and the oil tank 22 may also be distributed separately within the hub 1, which is not limited by the present invention. Furthermore, there are various manners to connect the oil tank 22 to the cylinder 21. The oil tank 22 may be installed on the cylinder 21 via a screw connection structure, or may be welded to the cylinder 21, or may be installed on the cylinder 21 via a clamp band, etc., which is not limited by the present invention.

It should be noted that, the above two related technical features: "the hydraulic pitch system 100 includes an accumulator 25 arranged on the connecting pipeline, the accumulator 25 being mounted on the cylinder 21" and "the oil tank 22 is mounted on the cylinder 21", can be set alternatively or simultaneously. Obviously, setting them simultaneously yields a better result.

There are various ways to arrange the accumulator 25 and the oil tank 22 on the cylinder 21. The accumulator 25 and the oil tank 22 may be arranged on the same side of the cylinder 21, or on both sides of the cylinder 21, etc., which is not limited by the present invention. Specifically, in this embodiment, please refer to FIG. 2 and FIG. 3, the oil tank 22 and the accumulator 25 are respectively arranged on both sides of the cylinder 21. This allows the weights of the oil tank 22, the accumulator 25, and the cylinder 21 to be evenly distributed, avoiding localized overweight, thereby facilitating the arrangement of the oil tank 22, the accumulator 25, and the cylinder 21 integrated together within the hub 1.

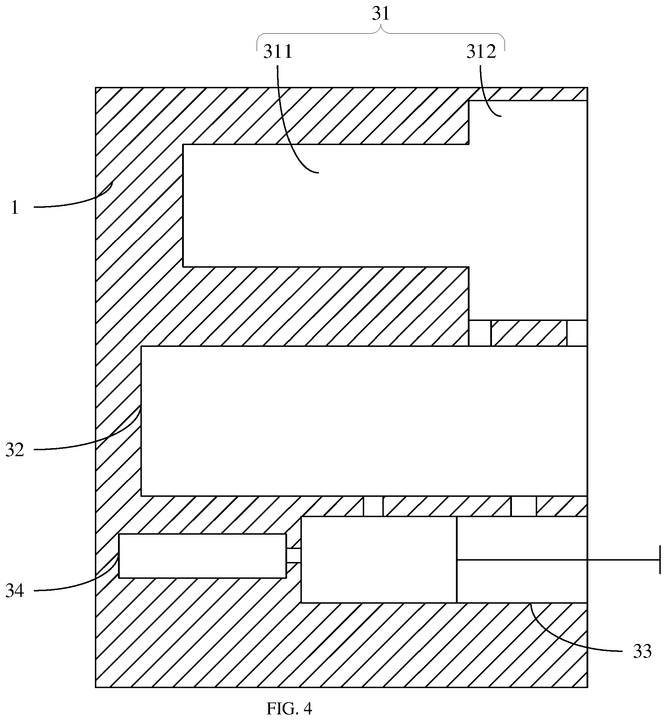

In an embodiment, please refer to FIG. 4, the hydraulic pitch system 100 further includes a carrier body 3. The carrier body 3 is provided with a first accommodating cavity 31, a second accommodating cavity 32, a third accommodating cavity 33, and a connecting channel. The hydraulic drive apparatus 24 and the valve assembly 23 are arranged in the first accommodating cavity 31. The oil tank 22 is arranged in the second accommodating cavity 32. The cylinder 21 is arranged in the third accommodating cavity 33. The connecting channel communicates with the first accommodating cavity 31, the second accommodating cavity 32, and the third accommodating cavity 33. Among them, the connecting pipeline includes the connecting channel. Thus, by providing the carrier body 3, the first accommodating cavity 31, the second accommodating cavity 32, and the third accommodating cavity 33 are arranged. The hydraulic drive apparatus 24, the valve assembly 23, the cylinder 21, and the oil tank 22 are integrated within the carrier body 3 by providing the first accommodating cavity 31, the second accommodating cavity 32, and the third accommodating cavity 33. At the same time, the connecting channel is directly used as the connecting pipeline to connect the first accommodating cavity 31, the second accommodating cavity 32, and the third accommodating cavity 33, thereby eliminating an external pipeline and a corresponding sealing ring, reducing the risk of pipe joint loosening and pipeline leakage. This can significantly reduce the replacement and operation and maintenance costs caused by rubber parts and their aging, thus enabling the hydraulic apparatus 2 to achieve modular packaging, allowing the hydraulic apparatus 2 to form an integral unit, helping to reduce the volume and weight of the hydraulic apparatus 2 and facilitating the integral replacement.

It should be noted that, the first accommodating cavity 31 includes a first accommodating sub-cavity 311 and a second accommodating sub-cavity 312 which are interconnected. Among them, the hydraulic drive apparatus 24 is arranged in the first accommodating sub-cavity 311, and the valve assembly 23 is arranged in the second accommodating sub-cavity 312. Thus, by providing the first accommodating sub-cavity 311 and the second accommodating sub-cavity 312, the first accommodating sub-cavity 311 and the second accommodating sub-cavity 312 can be respectively adapted to the hydraulic drive apparatus 24 and the valve assembly 23, helping to reduce sizes of the first accommodating sub-cavity 311 and the second accommodating sub-cavity 312, thereby contributing to reducing a volume of the carrier body 3.

In an embodiment, the carrier body 3 includes multiple carrier segments. The multiple carrier segments can be spliced together to form the first accommodating cavity 31, the second accommodating cavity 32, the third accommodating cavity 33, and the connecting channel. Thus, using a segmented arrangement facilitates installing the hydraulic drive apparatus 24, the valve assembly 23, the cylinder 21, and the oil tank 22 into the first accommodating cavity 31, the second accommodating cavity 32, and the third accommodating cavity 33 respectively. Furthermore, there are various manners to connect respective carrier segments. For example, the respective carrier segments may be spliced together via welding, or may be spliced together via bolts, etc. Any manner capable of splicing the respective carrier segments together is acceptable, which is not limited by the present invention.

Furthermore, please refer to FIG. 4, the carrier body 3 is further provided with a fourth accommodating cavity 34. The connecting channel communicates with the fourth accommodating cavity 34. The hydraulic apparatus 2 further includes an accumulator 25. The accumulator 25 is arranged in the fourth accommodating cavity 34. Thus, by providing the fourth accommodating cavity 34to accommodate the accumulator 25, the accumulator 25 is integrated within the carrier body 3, thereby helping to improve the integration level of the carrier body 3.

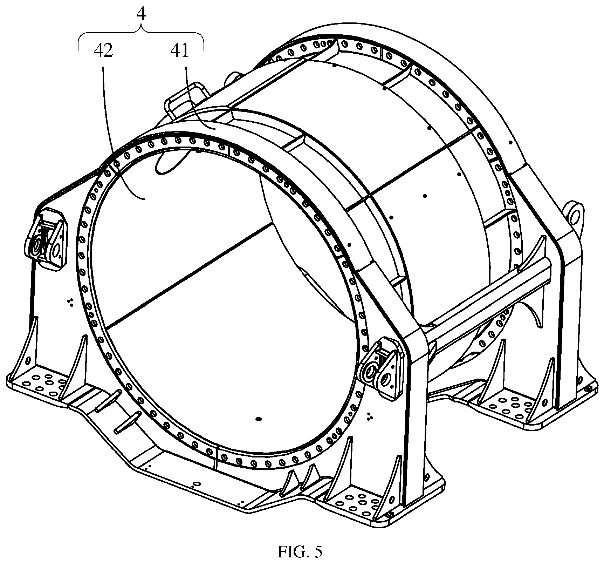

As the power generation capacity in megawatts of the wind turbines increases in the future, the size and the number of the accumulator 25, as well as the size and the number of the cylinder 21 are likely to increase, while the space within the hub 1 is limited. Therefore, in this embodiment, please refer to FIG. 5, the hub 1 includes a hub body and a connecting sleeve 4 provided on the hub body. The connecting sleeve 4 rotates synchronously with the hub body. Thus, by providing the connecting sleeve 4, the installation space of the hub 1 is increased, enabling the hydraulic apparatus 2 to be entirely installed within the hub 1. Furthermore, there are various manner to connect the hub body to the connecting sleeve 4. The connecting sleeve 4 may be connected to the hub body via a flange, or may be connected to the hub body via welding, etc., which is not limited by the present invention.

According to the invention, the oil tank 22 is arranged in the connecting sleeve 4, and/or, the hydraulic pitch system (100) further comprises an accumulator (25), the accumulator (25) being arranged in the connecting sleeve (4). Thus, arranging the oil tank 22 in the connecting sleeve 4 allows the oil tank 22 to rotate synchronously with the hub 1, facilitating the omission of the hydraulic-electric slip ring and reducing the cost of the hydraulic pitch system 100.

Thus, arranging the accumulator 25 in the connecting sleeve 4 saves space in the hub body, allowing the hydraulic drive apparatus 24 and the valve assembly 23 to be arranged within the hub body, thereby enabling the arrangement of a larger-sized hydraulic apparatus 2 within the hub 1.

It should be noted that the above two related technical features: "the oil tank 22 is arranged in the connecting sleeve 4" and "the hydraulic pitch system 100 further includes an accumulator 25, the accumulator 25 being arranged in the connecting sleeve 4", can be set alternatively or simultaneously, which is not limited by the present invention.

In an embodiment of the present invention, please refer to FIG. 5, the connecting sleeve 4 includes an outer cylinder 41 and an inner cylinder 42 rotatably mounted within the outer cylinder 41. The outer cylinder 41 is used to connect to the nacelle or a gearbox. The inner cylinder 42 is connected to the hub body. Thus, by providing the outer cylinder 41 and the inner cylinder 42, one end of the connecting sleeve can be connected to the nacelle or the gearbox, and the other end can be connected to the hub body. This not only enables the connecting sleeve 4 to rotate synchronously with the hub body, but also allows both ends of the connecting sleeve 4 to be supported by the nacelle or the gearbox and the hub body, preventing the connecting sleeve 4 from being suspended on the hub body, thereby facilitating the connecting sleeve 4 to maintain balance.

In an embodiment, the hydraulic pitch system 100 further includes a first drive power source arranged in the hub 1. The first drive power source is electrically connected to the hydraulic drive apparatus 24. Thus, by providing the first drive power source, the power of the hydraulic drive apparatus 24 is increased during emergency feathering of the hydraulic pitch system 100, enabling a rapid blade movement.

In an embodiment, the hydraulic pitch system further includes a plurality of sensors and a controller respectively connected to the plurality of sensors. The plurality of sensors are used to collect real-time parameters of multiple components of the hydraulic pitch system. The controller receives the real-time parameters collected by the plurality of sensors, monitors a state of the hydraulic pitch system based on these real-time parameters, and determines whether a fault has occurred in the hydraulic pitch system and which component is faulty.

Specifically, a displacement sensor can be arranged on a piston rod of the cylinder, and is used to monitor real-time position information of the piston rod. A pressure sensor can be arranged on an accumulator circuit, and is used to monitor a real-time pressure value of the accumulator circuit. A temperature sensor can be arranged in the oil tank, and is used to monitor a real-time oil temperature of the oil tank. A liquid level sensor can be arranged on the oil tank, and is used to monitor a real-time liquid level value of the oil tank. A leakage sensor can be arranged below the cylinder and/or the valve assembly to monitor whether there is a leakage point in the oil cylinder and/or the valve assembly. In an implementation, an angle sensor can be arranged at the blade root bearing to monitor a real-time angle of a blade relative to the hub. It should be noted that other types of sensors can also be included to monitor parameters of other components of the hydraulic pitch system, which is not limited by the present application.

In an implementation, the real-time parameters collected by the plurality of sensors are preprocessed. For example, a threshold can be set to remove an abnormal value; or a value can be removed when a difference between a current value and a previous value exceeds a threshold. There may be other data processing methods, which is not limited by the present application. Then, each sensor sends its preprocessed data to the controller, and the controller performs further processing based on the received data. The preprocessing operation, on one hand, ensures validity and accuracy of the data provided to the controller; on the other hand, it can also reduce a data transmission volume, and save the transmission overhead.

In an implementation, the controller can obtain the angle of the blade relative to the hub monitored by the angle sensor. The controller can also calculate a pitch angle based on the real-time position information of the piston rod monitored by the displacement sensor combined with a geometric relationship between a cylinder stroke and a pitch angle. Here, the displacement sensor and the angle sensor can serve as a redundant design. The controller uses data collected by the angle sensor and/or the displacement sensor to determine whether a blade has reached an expected position, monitor whether a pitch speed exceeds a threshold, etc.

In an implementation, the controller can obtain pressure data monitored by the pressure sensor. The pressure data can accurately reflect the internal pressure of the accumulator. Based on this, the controller determines whether it is permissible to start the hydraulic pitch system, ensuring the accumulator has sufficient pressure to complete emergency feathering when the hydraulic pitch system is in operation.

In an implementation, the controller can determine whether there is a leakage in the hydraulic pitch system based on the real-time liquid level value of hydraulic oil in the oil tank monitored by the liquid level sensor. For example, the controller can compare the real-time liquid level value with a liquid level threshold. When the real-time liquid level value is lower than the liquid level threshold, the controller outputs an alarm message to remind maintenance personnel to check.

In an implementation, the controller can obtain the temperature of the hydraulic oil in the oil tank monitored by the temperature sensor. The controller compares the monitored real-time oil temperature with an oil temperature threshold, and determines whether to activate overheat protection or low-temperature protection. An excessively high oil temperature can accelerate oil oxidation, reduce viscosity, and damage seals. For example, when the oil temperature is above 60°C-70°C, the controller controls the activation of high-temperature protection, such as triggering derated operation or shutdown for cooling. When the oil temperature is too low, viscosity increases sharply, causing difficulties in pump suction and high starting resistance. For example, when the oil temperature is below -10°C, the controller controls the activation of low-temperature protection, such as limiting the pitch speed or initiating preheating. The oil temperature threshold is related to a specific hydraulic fluid.

In an implementation, arranging a leakage sensor below the cylinder and/or valve assembly helps quickly locate a leakage source. Additionally, it can detect a leakage point earlier, before a significant drop in the overall oil level is detected by the liquid level sensor.

In an implementation, the controller can perform time-domain feature analysis, frequency-domain feature analysis, and time-series feature analysis on the data collected by the plurality of sensors. The controller can invoke a preset component remaining life prediction model and, based on the analyzed features and the component remaining life prediction model, obtain a predicted remaining life of a corresponding component. Then, based on a prediction result, a corresponding component can be replaced in time, reducing the risk of oil leakage caused by a failure of this component. For example, the time-domain feature analysis can involve performing processing such as mean, variance, etc., based on data collected by a certain sensor. The frequency-domain feature analysis can involve spectral peak analysis based on data collected by a certain sensor. The time-series feature analysis can involve sliding window statistics based on data collected by a certain sensor. The preset component remaining life prediction model can be implemented based on training of a neural network. The model may take time-domain features, frequency-domain features, and time-series features of a certain component as inputs and outputs a predicted remaining life of that component.

In an implementation, based on the data collected by the pressure sensor, time-domain feature analysis, frequency-domain feature analysis, and time-series feature analysis can be performed to obtain analyzed pressure-related data. The pressure-related data is input into a preset accumulator remaining life prediction model to obtain a predicted remaining life of the accumulator. Similarly, the remaining life prediction of other components is analogous and will not be repeated here.

In an implementation, an accumulator remaining life prediction model can be set up based on a relationship between the number of accumulator cycles and a pressure retention rate. The remaining life of the accumulator can be predicted by this model, and based on a prediction result, the accumulator can be replaced in time. The accumulator remaining life prediction model can be based on relevant features, such as a decay slope of pressure retention rate, a charge/discharge cycle time, a pressure oscillation envelope area, etc., and performs processing through a neural network to obtain the predicted remaining life. The neural network can be a long short-term memory (LSTM) network, a convolutional neural Network (CNN), etc., and a specific neural network is not limited by the present application.

In the technical solution provided by the present application, the hydraulic pitch system includes multiple sensors. The multiple sensors perform collaborative monitoring. On one hand, the data collected by multiple sensors can be used for data calibration, improving the accuracy of the controller's determination result. On the other hand, if some sensors fail, the controller can still perform relevant determinations since the monitoring of the hydraulic pitch system is not affected. The controller, based on the data collected by the sensors, monitors the state of the hydraulic pitch system and performs a fault diagnosis. This can reduce operation and maintenance costs, reduce unnecessary downtime for maintenance, and also improve the operational reliability and maintenance convenience of the hydraulic pitch system.

The present invention also proposes a wind turbine. The wind turbine includes a hydraulic pitch system 100. For specific structure of this hydraulic pitch system 100, reference may be made to the above embodiments. Since this wind turbine adopts all the technical solutions of the above embodiments, it at least has all the beneficial effects brought by the technical solutions of the above embodiments, which will not be repeated here.

The above descriptions are only exemplary implementations of the present invention and do not therefore limit the scope of the present invention. The scope of protection being defined by the appended claims.

## Claims

1. A hydraulic pitch system (100) for a wind turbine, wherein the hydraulic pitch system (100) comprises:
a hub (1); and
a hydraulic apparatus (2) arranged in the hub (1), wherein the hydraulic apparatus (2) comprises a cylinder (21) for driving a blade movement and an oil tank (22) for storing hydraulic oil, the cylinder (21) is connected to the oil tank (22) via a connecting pipeline, the connecting pipeline is provided with a valve assembly (23) and a hydraulic drive apparatus (24) for controlling a flow of hydraulic oil in the connecting pipeline, and the valve assembly (23) and the hydraulic drive apparatus (24) are both mounted on the cylinder (21);
the hub (1) comprising a hub body and a connecting sleeve (4) provided on the hub body, the connecting sleeve (4) rotating synchronously with the hub body;
**characterized in that**:
the oil tank (22) is arranged in the connecting sleeve (4); and/or, the hydraulic pitch system (100) further comprises an accumulator (25), the accumulator (25) being arranged in the connecting sleeve (4).

2. The hydraulic pitch system (100) according to claim 1, wherein the hydraulic apparatus (2) further comprises an accumulator (25) arranged on the connecting pipeline, the accumulator (25) being mounted on the cylinder (21); and/or,
the oil tank (22) is mounted on the cylinder (21).

3. The hydraulic pitch system (100) according to claim 2, wherein the oil tank (22) and the accumulator (25) are respectively arranged on both sides of the cylinder (21).

4. The hydraulic pitch system (100) according to claim 1, wherein the hydraulic pitch system (100) further comprises a carrier body (3), the carrier body (3) is provided with a first accommodating cavity (31), a second accommodating cavity (32), a third accommodating cavity (33), and a connecting channel, the hydraulic drive apparatus (24) and the valve assembly (23) are arranged in the first accommodating cavity (31), the oil tank (22) is arranged in the second accommodating cavity (32), the cylinder (21) is arranged in the third accommodating cavity (33), the connecting channel communicates with the first accommodating cavity (31), the second accommodating cavity (32), and the third accommodating cavity (33);
wherein the connecting pipeline comprises the connecting channel.

5. The hydraulic pitch system (100) according to claim 4, wherein the carrier body (3) is further provided with a fourth accommodating cavity (34), the connecting channel communicating with the fourth accommodating cavity (34);
the hydraulic apparatus (2) further comprises an accumulator (25), the accumulator (25) being arranged in the fourth accommodating cavity (34).

6. The hydraulic pitch system (100) according to claim 1, wherein the connecting sleeve (4) comprises an outer cylinder (41) and an inner cylinder (42) rotatably mounted within the outer cylinder (41), the outer cylinder (41) being used to connect to a nacelle or a gearbox, the inner cylinder (42) being connected to the hub body.

7. The hydraulic pitch system (100) according to any one of claims 1 to 6, wherein the hydraulic pitch system (100) further comprises a first drive power source arranged in the hub (1), the first drive power source being electrically connected to the hydraulic drive apparatus (24).

8. The hydraulic pitch system (100) according to any one of claims 1 to 7, wherein the hydraulic pitch system (100) further comprises a plurality of sensors and a controller respectively connected to the plurality of sensors, the plurality of sensors being used to collect real-time parameters of components of the hydraulic pitch system, the controller being used to monitor a state of the hydraulic pitch system based on the real-time parameters collected by the plurality of sensors.

9. The hydraulic pitch system (100) according to claim 8, wherein the plurality of sensors comprise at least two of the following:
a displacement sensor arranged on a piston rod of the cylinder (21), used to monitor real-time position information of the piston rod of the cylinder (21);
a pressure sensor arranged on an accumulator circuit, used to monitor a real-time pressure value of the accumulator circuit;
a temperature sensor arranged in the oil tank (22), used to monitor a real-time oil temperature of the oil tank (22);
a liquid level sensor arranged on the oil tank (22), used to monitor a real-time liquid level value of the oil tank (22);
a leakage sensor arranged below the cylinder (21) and/or the valve assembly (23), used to monitor whether there is a leakage point in the cylinder (21) and/or the valve assembly (23).

10. The hydraulic pitch system (100) according to claim 8 or 9, wherein the plurality of sensors perform preprocessing on the collected real-time parameters and send preprocessed data to the controller, wherein the preprocessing comprises removing an abnormal value based on a threshold, and/or, removing an abnormal value based on a difference between a current value and a previous value.

11. The hydraulic pitch system (100) according to any one of claims 8 to 10, wherein the controller respectively compares real-time values collected by the plurality of sensors with corresponding preset thresholds, and determines whether a fault exists and a faulty component based on a comparison result.

12. A wind turbine, comprising a hydraulic pitch system (100) according to any one of claims 1 to 11.

## Patentansprüche

1. Hydraulisches Pitch-System (100) für eine Windturbine, wobei das hydraulische Pitch-System (100) umfasst:
eine Nabe (1); und
eine Hydraulikvorrichtung (2), die in der Nabe (1) angeordnet ist, wobei die Hydraulikvorrichtung (2) einen Zylinder (21) zum Antreiben einer Blattbewegung und einen Öltank (22) zum Speichern von Hydrauliköl umfasst, der Zylinder (21) über eine Verbindungsleitung mit dem Öltank (22) verbunden ist, die Verbindungsleitung mit einer Ventilbaugruppe (23) und einer hydraulischen Antriebsvorrichtung (24) zum Steuern eines Hydraulikölflusses in der Verbindungsleitung versehen ist und die Ventilbaugruppe (23) und die hydraulische Antriebsvorrichtung (24) beide an dem Zylinder (21) montiert sind;
wobei die Nabe (1) einen Nabenkörper und eine Verbindungshülse (4) umfasst, die an dem Nabenkörper bereitgestellt ist, wobei sich die Verbindungshülse (4) synchron mit dem Nabenkörper dreht;
**dadurch gekennzeichnet, dass**:
der Öltank (22) in der Verbindungshülse (4) angeordnet ist; und/oder das hydraulische Pitch-System (100) ferner einen Speicher (25) umfasst, wobei der Speicher (25) in der Verbindungshülse (4) angeordnet ist.

2. Hydraulisches Pitch-System (100) nach Anspruch 1, wobei die Hydraulikvorrichtung (2) ferner einen Speicher (25) umfasst, der an der Verbindungsleitung angeordnet ist, wobei der Speicher (25) an dem Zylinder (21) angebracht ist; und/oder
der Öltank (22) am Zylinder (21) montiert ist.

3. Hydraulisches Pitch-System (100) nach Anspruch 2, wobei der Öltank (22) und der Speicher (25) auf gegenüberliegenden Seiten des Zylinders (21) angeordnet sind.

4. Hydraulisches Pitch-System (100) nach Anspruch 1, wobei das hydraulische Pitch-System (100) ferner einen Trägerkörper (3) umfasst, der Trägerkörper (3) mit einem ersten Aufnahmehohlraum (31), einem zweiten Aufnahmehohlraum (32), einem dritten Aufnahmehohlraum (33) und einem Verbindungskanal versehen ist, die hydraulische Antriebsvorrichtung (24) und die Ventilbaugruppe (23) in dem ersten Aufnahmehohlraum (31) angeordnet sind, der Öltank (22) in dem zweiten Aufnahmehohlraum (32) angeordnet ist, der Zylinder (21) in dem dritten Aufnahmehohlraum (33) angeordnet ist, der Verbindungskanal mit dem ersten Aufnahmehohlraum (31), dem zweiten Aufnahmehohlraum (32) und dem dritten Aufnahmehohlraum (33) in Verbindung steht;
wobei die Verbindungsleitung den Verbindungskanal umfasst.

5. Hydraulisches Pitch-System (100) nach Anspruch 4, wobei der Trägerkörper (3) ferner mit einem vierten Aufnahmehohlraum (34) versehen ist, wobei der Verbindungskanal mit dem vierten Aufnahmehohlraum (34) in Verbindung steht;
die Hydraulikvorrichtung (2) ferner einen Speicher (25) umfasst, wobei der Speicher (25) in dem vierten Aufnahmehohlraum (34) angeordnet ist.

6. Hydraulisches Pitch-System (100) nach Anspruch 1, wobei die Verbindungshülse (4) einen Außenzylinder (41) und einen Innenzylinder (42) umfasst, der drehbar innerhalb des Außenzylinders (41) montiert ist, wobei der Außenzylinder (41) zur Verbindung mit einer Gondel oder einem Getriebe dient, wobei der Innenzylinder (42) mit dem Nabenkörper verbunden ist.

7. Hydraulisches Pitch-System (100) nach einem der Ansprüche 1 bis 6, wobei das hydraulische Pitch-System (100) ferner eine erste Antriebsenergiequelle umfasst, die in der Nabe (1) angeordnet ist, wobei die erste Antriebsenergiequelle elektrisch mit der hydraulischen Antriebsvorrichtung (24) verbunden ist.

8. Hydraulisches Pitch-System (100) nach einem der Ansprüche 1 bis 7, wobei das hydraulische Pitch-System (100) ferner eine Vielzahl von Sensoren und eine Steuerung umfasst, wobei die Steuerung mit der Vielzahl von Sensoren verbunden ist, wobei die Vielzahl von Sensoren verwendet wird, um Echtzeitparameter von Komponenten des hydraulischen Pitch-Systems zu erfassen, wobei die Steuerung verwendet wird, um einen Zustand des hydraulischen Pitch-Systems basierend auf den von der Vielzahl von Sensoren erfassten Echtzeitparameter zu überwachen.

9. Hydraulisches Pitch-System (100) nach Anspruch 8, wobei die Vielzahl von Sensoren mindestens zwei der folgenden Sensoren umfasst:
einen Wegsensor, der an einer Kolbenstange des Zylinders (21) angeordnet ist und verwendet wird, um Echtzeitpositionsinformationen der Kolbenstange des Zylinders (21) zu überwachen;
einen Drucksensor, der an einem Speicherschaltkreis angeordnet ist und verwendet wird, um einen Echtzeitdruckwert des Speicherschaltkreises zu überwachen;
einen Temperatursensor, der in dem Öltank (22) angeordnet ist und verwendet wird, um eine Echtzeit-Öltemperatur des Öltanks (22) zu überwachen;
einen Füllstandssensor, der an dem Öltank (22) angeordnet ist und verwendet wird, um einen Echtzeitfüllstandswert des Öltanks (22) zu überwachen;
einen Leckagesensor, der unter dem Zylinder (21) und/oder der Ventilbaugruppe (23) angeordnet ist, um zu überwachen, ob eine Leckagestelle in dem Zylinder (21) und/oder der Ventilbaugruppe (23) vorhanden ist.

10. Hydraulisches Pitch-System (100) nach Anspruch 8 oder 9, wobei die Vielzahl von Sensoren eine Vorverarbeitung an den gesammelten Echtzeitparametern durchführt und vorverarbeitete Daten an die Steuerung sendet, wobei die Vorverarbeitung das Entfernen eines abnormalen Werts basierend auf einem Schwellenwert und/oder das Entfernen eines abnormalen Werts basierend auf einer Differenz zwischen einem aktuellen Wert und einem vorherigen Wert umfasst.

11. Hydraulisches Pitch-System (100) nach einem der Ansprüche 8 bis 10, wobei die Steuerung jeweils Echtzeitwerte, die von der Vielzahl von Sensoren erfasst werden, mit entsprechenden voreingestellten Schwellenwerten vergleicht und anhand eines Vergleichsergebnisses bestimmt, ob ein Fehler vorliegt, und eine fehlerhafte Komponente ermittelt.

12. Windturbine, umfassend ein hydraulisches Pitch-System (100) nach einem der Ansprüche 1 bis 11.

## Revendications

1. Un système de pas hydraulique (100) pour éolienne, dans lequel le système de pas hydraulique (100) comprend :
un moyeu (1) ; et
un appareil hydraulique (2) agencé dans le moyeu (1), dans lequel l'appareil hydraulique (2) comprend un cylindre (21) pour entraîner un mouvement de lame et un réservoir d'huile (22) pour stocker de l'huile hydraulique, le cylindre (21) étant connecté au réservoir d'huile (22) via une conduite de connexion, la conduite de connexion étant pourvue d'un ensemble de soupape (23) et d'un appareil d'entraînement hydraulique (24) pour contrôler un écoulement d'huile hydraulique dans la conduite de connexion, et l'ensemble de soupape (23) et l'appareil d'entraînement hydraulique (24) étant tous deux montés sur le cylindre (21) ;
le moyeu (1) comprenant un corps de moyeu et un manchon de connexion (4) prévu sur le corps de moyeu, le manchon de connexion (4) tournant de manière synchrone avec le corps de moyeu ;
**caractérisé en ce que** :
le réservoir d'huile (22) est agencé dans le manchon de connexion (4) ; et/ou le système de pas hydraulique (100) comprend en outre un accumulateur (25), l'accumulateur (25) étant agencé dans le manchon de connexion (4).

2. Le système de pas hydraulique (100) selon la revendication 1, dans lequel l'appareil hydraulique (2) comprend en outre un accumulateur (25) agencé sur la conduite de connexion, l'accumulateur (25) étant monté sur le cylindre (21) ; et/ou
le réservoir d'huile (22) est monté sur le cylindre (21).

3. Le système de pas hydraulique (100) selon la revendication 2, dans lequel le réservoir d'huile (22) et l'accumulateur (25) sont respectivement agencés des deux côtés du cylindre (21).

4. Le système de pas hydraulique (100) selon la revendication 1, dans lequel le système de pas hydraulique (100) comprend en outre un corps de support (3), le corps de support (3) étant pourvu d'une première cavité de réception (31), d'une deuxième cavité de réception (32), d'une troisième cavité de réception (33) et d'un canal de connexion, l'appareil d'entraînement hydraulique (24) et l'ensemble de soupape (23) étant agencés dans la première cavité de réception (31), le réservoir d'huile (22) étant agencé dans la deuxième cavité de réception (32), le cylindre (21) étant agencé dans la troisième cavité de réception (33), le canal de connexion communiquant avec la première cavité de réception (31), la deuxième cavité de réception (32) et la troisième cavité de réception (33) ;
sans lequel la conduite de connexion comprend le canal de connexion.

5. Le système de pas hydraulique (100) selon la revendication 4, dans lequel le corps de support (3) est en outre pourvu d'une quatrième cavité de réception (34), le canal de connexion communiquant avec la quatrième cavité de réception (34) ;
l'appareil hydraulique (2) comprend en outre un accumulateur (25), l'accumulateur (25) étant disposé dans la quatrième cavité de réception (34).

6. Le système de pas hydraulique (100) selon la revendication 1, dans lequel le manchon de connexion (4) comprend un cylindre externe (41) et un cylindre interne (42) monté rotatif à l'intérieur du cylindre externe (41), le cylindre externe (41) étant utilisé pour se connecter à une nacelle ou à une boîte de vitesses, le cylindre interne (42) étant connecté au corps de moyeu.

7. Le système de pas hydraulique (100) selon l'une quelconque des revendications 1 à 6, dans lequel le système de pas hydraulique (100) comprend en outre une première source de puissance d'entraînement agencée dans le moyeu (1), la première source de puissance d'entraînement étant électriquement connectée à l'appareil d'entraînement hydraulique (24).

8. Le système de pas hydraulique (100) selon l'une quelconque des revendications 1 à 7, dans lequel le système de pas hydraulique (100) comprend en outre une pluralité de capteurs et un dispositif de commande connecté respectivement à la pluralité de capteurs, la pluralité de capteurs étant utilisée pour collecter des paramètres en temps réel de composants du système de pas hydraulique, le dispositif de commande étant utilisé pour surveiller un état du système de pas hydraulique sur la base des paramètres en temps réel collectés par la pluralité de capteurs.

9. Le système de pas hydraulique (100) selon la revendication 8, dans lequel la pluralité de capteurs comprend au moins deux des éléments suivants :
un capteur de déplacement agencé sur une tige de piston du cylindre (21), utilisé pour surveiller des informations de position en temps réel de la tige de piston du cylindre (21) ;
un capteur de pression agencé sur un circuit accumulateur, utilisé pour surveiller une valeur de pression en temps réel du circuit accumulateur ;
un capteur de température agencé dans le réservoir d'huile (22), utilisé pour surveiller une température d'huile en temps réel du réservoir d'huile (22) ;
un capteur de niveau de liquide agencé sur le réservoir d'huile (22), utilisé pour surveiller une valeur de niveau de liquide en temps réel du réservoir d'huile (22) ;
un capteur de fuite agencé sous le cylindre (21) et/ou l'ensemble de soupape (23), utilisé pour surveiller la présence ou non d'un point de fuite dans le cylindre (21) et/ou l'ensemble de soupape (23).

10. Le système de pas hydraulique (100) selon la revendication 8 ou 9, dans lequel la pluralité de capteurs effectue un prétraitement sur les paramètres en temps réel collectés et envoie des données prétraitées au dispositif de commande, le prétraitement comprenant l'élimination d'une valeur anormale sur la base d'un seuil et/ou l'élimination d'une valeur anormale sur la base d'une différence entre une valeur actuelle et une valeur précédente.

11. Le système de pas hydraulique (100) selon l'une quelconque des revendications 8 à 10, dans lequel le dispositif de commande compare respectivement des valeurs en temps réel collectées par la pluralité de capteurs à des seuils prédéfinis correspondants, et détermine si un défaut existe et un composant défectueux sur la base d'un résultat de comparaison.

12. Une éolienne comprenant un système de pas hydraulique (100) selon l'une quelconque des revendications 1 à 11.
